Europäisches Patentamt

(19) European Patent Office

Office européen des brevets

(11) Veröffentlichungsnummer: **0 041 258**

**A1**

(12) # EUROPÄISCHE PATENTANMELDUNG

(21) Anmeldenummer: 81104142.5

(22) Anmeldetag: 29.05.81

(51) Int. Cl.³: **A 61 C 7/00**
**B 21 F 1/00**

(30) Priorität: 29.05.80 IT 2240580

(43) Veröffentlichungstag der Anmeldung:
09.12.81 Patentblatt 81/49

(84) Benannte Vertragsstaaten:
AT BE CH FR GB LI LU NL SE

(71) Anmelder: Drisaldi, Giovanni
Via Valletta Fogliano, 1
I-27029 Vigevano(IT)

(71) Anmelder: Manetti, Virgilio
Via Filagno, 14
I-24047 Treviglio(IT)

(71) Anmelder: Segu, Franco
Corso Cavour 34
I-27029 Vigevano(IT)

(71) Anmelder: Segu, Sandro
Corso Cavour 102
I-27029 Vigevano(IT)

(71) Anmelder: Segu, Bruno
Via Trilussa 22
I-27029 Vigevano(IT)

(72) Erfinder: Drisaldi, Giovanni
Via Valletta Fogliano, 1
I-27029 Vigevano(IT)

(72) Erfinder: Manetti, Virgilio
Via Filagno, 14
I-24047 Treviglio(IT)

(72) Erfinder: Segu, Franco
Corso Cavour 34
I-27029 Vigevano(IT)

(72) Erfinder: Segu, Sandro
Corso Cavour 102
I-27029 Vigevano(IT)

(72) Erfinder: Segu, Bruno
Via Trilussa 22
I-27029 Vigevano(IT)

(74) Vertreter: Borella, Ada
Ing. A. Racheli & C. Viale San Michele del Carso, 4
I-20144 Milan(IT)

(54) Verfahren und Vorrichtung zur Verwirklichung der Drahtbiegungen für die Zahnregulierung.

(57) Nach dem erfindungsgemässen Verfahren ist vorgesehen, den Draht (13) zur Zahnregulierung in einem Schraubstock zu fassen, in ein erstes in einer Arbeitsplatte (12) angebrachtes Loch (20) einen verlängerten Zapfen eines Biegeelementes einzuführen, den Draht (13) in einen zwischem dem Gerätezapfen und dem damit zusammenarbeitenden Vorsprfng vorgesehenen Kanal einzuführen, das Gerät um den in das erste Loch (20) der Arbeitsplatte (12) befindlichen Zapfen zu drehen, wodurch die erste Biegung des Drahtes (13) verwirklicht wird, das Gerät dann aus dem ersten Loch (20) zu nehmen und an dessen Stelle einen Stift einzuführen, wodurch der Draht (13) in seiner gebogenen Stellung gehalten wird, das Gerät dann in das zweite Loch (21) der Arbeitsplatte (12) einzusetzen und eine weitere Biegung durchzuführen, wobei in gleicher Weise vorgegangen wird, bis alle erforderlichen Biegungen durchgeführt sind.
Die Erfindung sieht auch die Vorrichtung zur Verwirklichung des Verfahrens vor.

EP 0 041 258 A1

FIG.3

COMPLETE DOCUMENT

Die vorliegende Erfindung betrifft die Verwirklichung des Biegens von Saitendraht, der bei der Zahnregulierung verwendet wird, um so auf die Zähne einzuwirken, dass sie eine gewünschte Optimalstellung erreichen.

Zum Ausrischten der Zähne werden Kräfte auf sie ausgeübt, wofür Saitendraht verwendet wird, der im Aufriss und/oder Grundriss eine Reihe von Biegungen besonderer Form, d.h. entsprechend der gewünschten Wirkung, die auf jeden einzelnen Zahn oder jede Zahnwurzel ausgeübt werden soll, aufweist.

Gegenwärtig erfolgt die Drahtbiegung vonhand und zwar nur mit Hilfe einer Zange, was ein uneinheitliches Ergebnis zur Folge hat. Ausserdem ist die Durchführung langwierig, schwierig und teuer.

Die vorliegende Erfindung hat sich deshalb zur Aufgabe gemacht, ein neues Verfahren zum Drahtbiegen sowie die entsprechende Vorrichtung zu verwirklichen, um eine einwandfreie Ausführung sämtlicher Biegearten, die auch leicht von nicht spezialisierten Personen durchgeführt werden können, zu ermöglichen.

Die Aufgabe wurde dadurch gelöst, dass vorgesehen ist, den Draht zur Zahnregulierung in einem Schraubstock zu fassen, in ein in einer Arbeitsplatte vorgesehenes erstes Loch einen verlängerten Zapfen eines Biegegerätes eintreten zu lassen, den Draht in einen zwischen dem Zapfen des Geräts und dem damit zusammenarbeitenden Vorsprung vorgesehenen Kanal einzuführen, das Gerät um den im ersten Loch der Arbeitsplatte eingeführten Zapfen zu drehen, wodurch eine erste Drahtbiegung verwirklicht wird, dann das Gerät aus dem ersten Loch zu entfernen und in dieses Loch einen Stift einzuführen, der den gebogenen Draht in dieser Stellung befestigt, anschliessend das Gerät in ein zweites Loch der Arbeitsplatte einzuführen, eine weitere Drahtbiegung vorzunehmen und diese Arbeitsgänge solange fortzusetzen, bis alle gewünschten Biegungen erhalten sind.

Die vorliegende Erfindung sieht auch eine Vorrichtung vor, die einen Schraubstock für den Draht, eine neben dem Schraubstock liegenden Arbeitsplatte, die innerhalb der Biegekurven des Drahtes Löcher aufweist, ein Gerät, das aus einem in die Löcher der Arbeitsplatte eindringenden und sich in diesen drehenden Zapfen und aus einem in einem gewissen Abstand vom Zapfen angeordneten Vorsprung gebildet ist, wodurch ein Kanal entsteht, in den der Draht eindringt, sowie eine Mehrzahl von Stiften zum Blockieren der erfolgten Drahtbiegungen umfasst.

Eine bevorzugte Lösung der Erfindung sieht vor, dass eine bestimmte Gruppe von Biegungen bildende Löcher auf einer unbeweglichen Arbeitsplatte angeordnet ist, um vor dem Schraubstock für den Draht verschiedene gewünschte Formen aufweisen zu können.

Die Erfindung wird nachstehend anhand des in der beigefügten Zeichnung dargestellten Verwirklichungsbeispieles beschrieben: Es zeigen:

Fig. 1 eine Draufsicht auf die erfindungsgemässe Vorrichtung

auf die die Drahtbiegung bestimmende Arbeitsplatte
und der zu biegende Draht noch nicht angeordnet sind;

Fig. 2 eine Vorderansicht der gleichen Vorrichtung in derselben
Einsatzstellung wie Fig. 1;

Fig. 3 eine Draufsicht auf die Vorrichtung nach Fig. 1, nachdem
die die Drahtbiegung bestimmende Arbeitsplatte und der
entsprechende Draht montiert sind;

Fig. 4 ein Beispiel des mit der vorgeschlagenen Vorrichtung
verwirklichten Drahtes;

Fig. 5a und 5b eine Vorderansicht bzw. Draufsicht auf das
Biegegerät;

Fig. 6 eine Seitenansicht des Befestigungsstiftes für die
jeweils ausgeführte Drahtbildung.

Aus den Figuren ist zu entnehmen, dass die vorgeschlagene
Vorrichtung einen C-förmigen Ständer 10 umfasst, der einen
schwalbenschwanzförmigen Hohlraum 11 zur Aufnahme der
austauschbaren Platte 12, die im Innern jeder vom Saitendraht
13 anzunehmenden Biegung Löcher hat, aufweist. Diese Löcher
bestimmen den Verlauf, den der Saitendraht 13 annehmen muss.

Der C-förmige Ständer 10 kann mit einer Schraube 14 fest
angezogen werden, um die Platte 12 im Hohlraum 11 festzuklemmen.

An der Seite des Ständers 10 ist ein in bekannter Weise verwirlichter Schraubstock 15 für den Draht 13 starr befestigt, um den
Draht 13 in den dafür vorgesehen Hohlraum 16 durch Betätigung
der Schraube 17 zu blockieren.

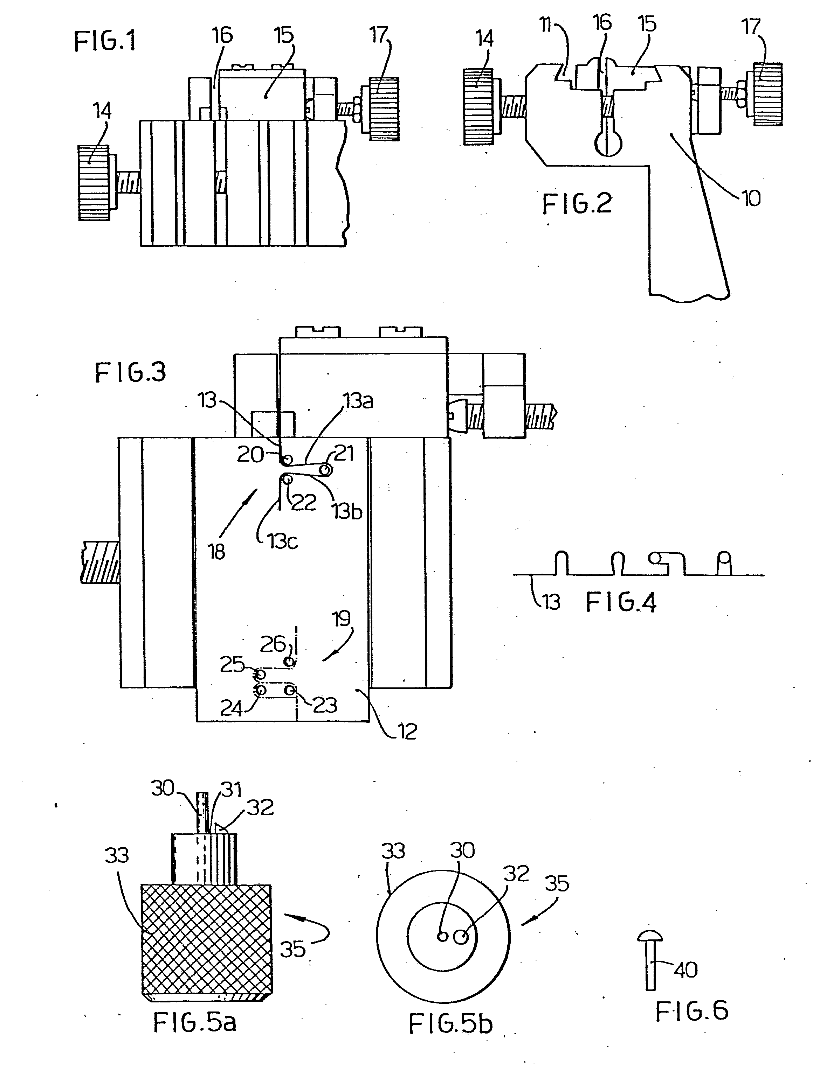

Nachstehend wird das Verfahren zum Biegen des Drahtes 13 anhand der Figur 3 beschrieben, in der eine Platte 12 mit zwei Gruppen von Löchern, die im allgemeinen mit 18 und 19 bezeichnet sind, dargestellt ist. Die Lochgruppe 18 ist so angeordnet, dass sie vor dem Hohlraum 16 des Schraubstockes liegt und wird für das nachstehend beschriebene Beispiel verwendet.

Der Draht 13 wird im Hohlraum 16 vom Schraubstock 15 durch Festschrauben der Schraube 17 festgeklemmt. Zuerst tritt der Draht in nahezu gerader Richtung aus dem Hohlraum 16 aus. Das in Fig. 5a und 5b dargestellte Gerät 35 wird nun zur Ausführung der Biegung verwendet. Sein Zapfen 30 wird in das erste Loch 20 der Platte 12 eingesetzt, wobei man den Draht in den Kanal 31 zwischen dem Zapfen 30 und dem mit dem Zapfen zusammenarbeitenden Vorsprung 32 eintreten lässt. Durch Drehen der Nutmutter 33 des Gerätes erfolgt die erste Biegung des Drahtes, der dadurch die in Fig. 3 angegebene Stellung 13a einnimmt. Nun zieht man das Gerät 35 wieder aus dem Loch 20; sobald der Zapfen 30 ausgetreten ist, wird in das Loch 20 ein als Nagel oder einfacher Rundstab ausgebildeter in Fig. 6 dargestellter Stift 40 eingesetzt; dadurch wird der Draht in der nunmehr angenommenen Form gehalten. Das Gerät 35 wird nun erneut in das folgende Loch 21 eingeführt, wobei man den Draht 13 in den Kanal 31 zwischen dem Zapfen 30 und dem Vorsprung 32 eintreten lässt, wodurch eine weitere Biegung des Drahtes 13 verwirklicht wird, dessen freies Ende mit dem Teil 13b (Fig. 3) zusammenfällt. Das Biegegerät 35 wird erneut aus dem Loch 21 gezogen und ein weiterer Stift 40 eingesetzt und anschliessend das Gerät 35 in das nachfolgende Loch 22 eingeführt, wobei das freie Ende des Drahtes 13 in den Kanal 31 eingeführt und das Gerät 35 gedreht wird, um auf diese Weise

- 6 -

eine neue Biegung zu verwirklichen, sodass das freie Drahtende 13 die mit 13c in Fig. 3 dargestellte Stellung annehmen kann.

Damit ist die sehr einfache Biegung des Drahtes zur Zahnregulierung beendet.

5. In Fig. 3 ist ausserdem mit 19 eine weitere Biegegruppe eingezeichnet, bei der die Löcher 23 bis 26 die Biegung bestimmen, die mit strichpunktierter Linie auf der Platte 12 dargestellt ist.

Wie aus dem oben Gesagten zu entnehmen ist, ist das Verfahren zur Durchführung von Biegungen universell und ermöglicht die Verarbeitung von runden, rechteckigen oder viereckigen Drähten, sodass Zahnregulierungsvorrichtungen verschiedenster Art ausgeführt werden können.

In Fig. 4 ist beispielsweise ein gebogener Draht dargestellt.

Anmelder:

DRISALDI - MANETTI - SEGU' - SEGU' - SEGU'

Patentansprüche

1.     Verfahren zum Verwirklichen von Saitendrahtbiegungen für Zahnreguliervorrichtungen, dadurch gekennzeichnet, dass vorgesehen ist, den Zahnregulierdraht in einem Schraubstock zu fassen, in ein erstes in der Arbeitsplatte vorgesehenes Loch einen verlängerten Zapfen eines Biegegerätes einzusetzen, den Draht in einen zwischen dem Gerätezapfen und dem mit ihm zusammenarbeitenden Vorsprung vorgesehenen Kanal einzuführen, das Gerät um den in das erste Loch der Arbeitsplatte eingeführten Zapfen zu drehen, wodurch die erste Biegung des Drahtes verwirklicht wird, das Gerät aus dem ersten Loch zu ziehen und darin einen Stift einzusetzen, der den Draht in der gebogenen Stellung befestigt, das Gerät dann in das zweite Loch der Arbeitsplatte einzusetzen und eine zweite Biegung durchzuführen und die obigen Vorgänge solange zu wiederholen, bis alle gewünschten Biegungen erhalten sind.

2.     Vorrichtung zur Verwirklichung des Verfahrens nach Anspruch 1, dadurch gekennzeichnet, dass sie einen Schraubstock (15) für den Draht, eine neben dem Schraubstock (15) angeordnete und mit Löcher (20-bis 26) versehene Arbeitsplatte (12), ein Biegegerät (35), bestehend aus einem Zapfen (30) zum Eindringen in die Löcher (20 bis 26) und aus einem Vorsprung (32), der in einer gewissen Entfernung vom Zapfen (30) angeordnet ist, sodass ein Kanal (31) entsteht, in den der Draht (13) eindringen kann, sowie eine Mehrzahl Stifte (40) zum Blockieren der jeweils verwirklichten Drahtbiegung umfasst.

3. Vorrichtung nach Anspruch 2, dadurch gekennzeichnet, dass jede Gruppe Löcher (18, 19) für sich selbst in einem besonderen Bereich der Arbeitsplajte (12) verwirklicht ist.

4. Vorrichtung nach Anspruch 3, dadurch gekennzeichnet, dass jede auf einer Arbeitsplatte (12) vorgesehen Lochgruppe (18, 19) in Übereinstimmung mit dem Schraubstock (15) gebracht wird, der ein Ende des Saitendrahtes (13) festhält.

5. Vorrichtung nach Anspruch 4, dadurch gekennzeichnet, dass mehrere austauschbare Platten (12) vorgesehen sind.

FIG.1

16    15    17

14

FIG.2

14    11    16    15    17

10

FIG.3

13    13a
20        21
22    13b
18    13c

13    FIG.4

19
26
25
24    23

12

30    31    32

33

35

FIG.5a

33    30    32    35

FIG.5b

40

FIG.6

**Europäisches Patentamt**

## EUROPÄISCHER RECHERCHENBERICHT

EP 81 10 4142

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| A | DE - C - 564 698 (KORKHAUS) <br> * Anspruch; Figuren * | 1 |
| | -- | |
| A | DE - C - 667 040 (BIMLER) <br> * Anspruch 1; Figuren 5,6 * | 1 |
| | -- | |
| A | US - A - 1 606 550 (WILLIAMS) <br> * Ansprüche; Figuren * | 1 |
| | -- | |
| A | US - A - 4 049 025 (GILLINGWATER) <br> * Spalte 2, Zeilen 34-37; Figuren * | 1,2 |
| | -- | |
| A | DE - C - 417 891 (BUNDGENS) <br> * Seite 2, Zeilen 6-29; Figur * | 2 |
| | ---- | |

**KLASSIFIKATION DER ANMELDUNG (Int. Cl.³)**

A 61 C 7/00
B 21 F 1/00

**RECHERCHIERTE SACHGEBIETE (Int. Cl.³)**

A 61 C
B 21 F
B 21 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-09-1981 | VANRUNXT |

EPA form 1503.1 06.78